Europäisches Patentamt

European Patent Office

Office européen des brevets

(11) Publication number: **0 178 651 B1**

## EUROPEAN PATENT SPECIFICATION

(45) Date of publication of patent specification: **05.08.92**  (51) Int. Cl.⁵: **G06F 15/40**

(21) Application number: **85113130.0**

(22) Date of filing: **16.10.85**

(54) **Data retrieving apparatus.**

(30) Priority: **16.10.84 JP 216808/84**

(43) Date of publication of application:
**23.04.86 Bulletin 86/17**

(45) Publication of the grant of the patent:
**05.08.92 Bulletin 92/32**

(84) Designated Contracting States:
**DE FR GB**

(56) References cited:
**US-A- 4 524 345**

**11TH IEEE COMPUTER SOCIETY INTERNATIONAL CONFERENCE, Washington, 9th-11th September 1975, pages 93-96, IEEE, New York, US; K. TAKAHASHI et al.: "Symbol string pattern recognition by magnetic bubble devices"**

**CONFERENCE PROCEEDINGS, 9TH ANNUAL SYMPOSUIM ON COMPUTER ARCHITECTURE, Austin, Texas, 26th - 29th April 1982, pages 201-210, IEEE, New York, US; S. PRAMANIK: "Database filters"**

**FOURTH INTERNATIONAL CONFERENCE ON VERY LARGE DATA BASES, West Berlin, 13 -**

**15th September 1978, pages 270-279, IEEE, New York, US; L.A. HOLLAAR et al.: "Current research into specialized processors for text information retrievial"**

**IEEE TRANSACTIONS ON COMPUTERS, vol. C-28, no. 12, December 1979, pages 879-887, IEEE, New York, US; V.M. PLAVSIC et al.: "Sequential evaluation of boolean functions"**

(73) Proprietor: **NEC CORPORATION**
**7-1, Shiba 5-chome Minato-ku**
**Tokyo 108-01(JP)**

(72) Inventor: **Yamada, Hachiro**
**c/o NEC Corporation 33-1, Shiba 5-chome**
**Minato-ku Tokyo(JP)**

(74) Representative: **Glawe, Delfs, Moll & Partner**
**Patentanwälte**
**Postfach 26 01 62 Liebherrstrasse 20**
**W-8000 München 26(DE)**

EP 0 178 651 B1

## Description

BACKGROUND OF THE INVENTION:

The present invention relates to an information processing apparatus, and more particularly to a data retrieving apparatus for retrieving or collating a string of data such as words.

Data string collation apparatuses of the type described above are utilized for extracting feature in a pattern recognition system, keywords from an original file of a text, as an aid to language translation, for decoding abridged sentences in correspondence, and for constructing a non-structural data base with figures, images, texts, and the like. The apparatuses are indispensable for the so called "artificial intelligence" type information processing systems.

Data string collation of the prior art is effected by successive processing by a general purpose computer controlled by software, and an extremely long processing time had been necessary. Therefore, data string collation has been limited to a certain scale. In addition, the object of collation has been limited to such a string which is segmented by each word and constructed.

In order to examine, for example, where a pattern consisting of m strings exists in a text consisting of n strings, collation processing must be made $m(n-m+1)$ times. To search a composition of $n = 10^3$ character strings from a text of $m = 10^9$ which is stored in a magnetic disk or an optical recording disk, collation processing must be made $10^{12}$ times. Therefore, it is unrealistic to retrieve a large capacity of raw data such as texts, images, fingures, voices, and the like, so that the collation processing has been limited to the retrieval by adding in advance keywords to the raw data and to the retrieval of the data which has been constructed in advance in a table system. Flexible collation processing which permits the change of constituent elements of the strings has required an excessively extended processing time.

More definitely, the problems of a conventional string collation apparatus and its collation system will be described.

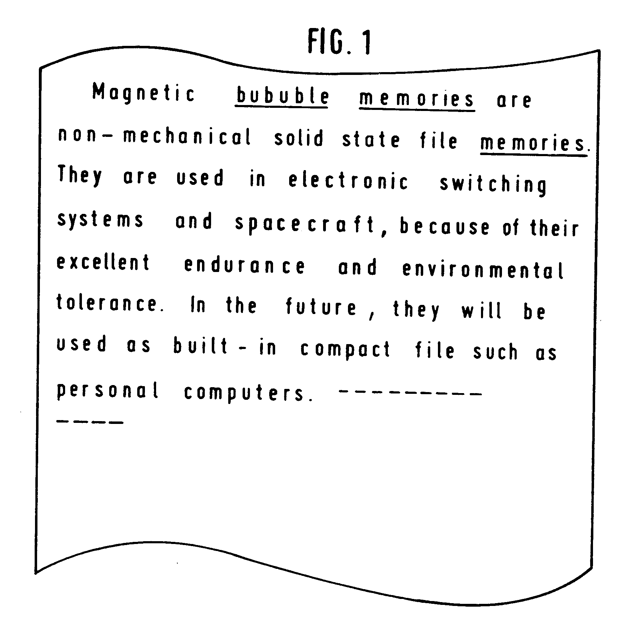

Fig. 1 shows an example of a text as the object of string collation. A large number of such texts are stored in a file memory of a word processor. Therefore, when text is to be searched for, retrieval must be made directly by a word representing the content of request.

To know if the text shown in Fig. 1 is an article containing strings such as "memory", "bubble", and the like, it is necessary to determine whether or not those portions which match the strings such as "memory", "memories", bubbles", and the like, exist in the text. Comparison and collation of such strings with the test require much time if a conventional computer and a software are employed.

One page of English text contains about 3,000 characters inclusive of spaces between words. The length of strings to be collated is 6 characters for both "memory" and "bubble". Collation of the strings of the 6 characters with the string of the 3,000 characters generally needs comparison of characters so many times in the order that is equal to the product of the 6 characters and 3,000 characters. Even if the character comparison time with a microprocessor is 1 $\mu$sec. retrieval of each string needs 18 msec.

The number of characters in a text which is the object of retrieval in practice may be as great as $10^9$, and the number of characters of a string for which collation is made sometimes exceeds 100. The number of strings to be collated is not always 1; it is sometimes as many as several dozen. In such a case, the collation time is some hundreds of hours. Therefore, such collation is impossible is practice, and collation has been limited practically to collation of extracted keywords by manually extracting the keywords in advance.

It is also difficult to collate a string which contains incorrect characters, extra length of characters or an insufficient string from which a certain characters are missing. For instance, when a string "MEMXRY" containing an incorrect character "X" in place of "O" of a character string "MEMORY" a string "MEMRY", from which "O" is missing, or a string "MEMXORY" containing an extra character "X",is applied as an input string, it is desirable that the string collation produces a signal indicating that such an input is similar to the collation string "MEMORY". However, a conventional string collation apparatus and collation system can not cope with the problem of many missing characters or many extra characters, though it is capable of examining the similarity between an incorrect string and the correct version by superimposing the input string upon the collation string.

A data string retrieving apparatus according to the preamble of claim 1 is known from the article "data base filters" by Pramanic published in Conference Proceedings, 9th annual symposium on computer architecture, Houston, Texas, April 1982, pp 201 to 210 IEEE New York, US. This known apparatus comprises a decoder circuit for searching character strings, wherein only such character strings which are identical to the character string to be searched can be determined leading to the above mentioned problems.

It is therefore the object of the invention to provide a data retrieving apparatus which can quickly extract strings from unstructured strings such as texts, graphics and tables of figures and which can retrieve a string which contains errors, extra characters or from which characters may be missed.

This object is achieved by a data string retrieving apparatus as defined in claim 1; the depending claims are related to further developments of the invention.

According to the present invention, in addition to the detection of the exact string of characters which is the same as that stored in the memory, a string of characters which is close to the string of characters stored in the memory circuit can be detected by the second sequential logic circuit.

Accordingly, the present invention allows to retrieve a non-exact string of characters as well as the exact string of characters. Thus, the present invention improves the practical flexibility in retrieving apparatus.

BRIEF DESCRIPTION OF THE DRAWINGS:

Fig. 1 is a drawing showing a part of text to be retrieved;

Figs. 2(a) to 2(c) are state shift diagrams showing the principle of the present invention;

Figs. 3(a) and 3(b) are other state shift diagrams showing the principle of the present invention;

Fig. 4 is still another state shift diagram showing the principle of the present invention;

Figs. 5 is an explanatory diagram of a first embodiment of the invention;

Fig. 6 is a schematic diagram showing a second embodiment of the invention;

Fig. 7 is a schematic diagram of a third embodiment of the present invention;

Fig. 8 is a schematic diagram of a fourth embodiment of the present invention;

Fig. 9 is a schematic diagram of a fifth embodiment of the present invention;

Fig. 10 is a schematic diagram of a sixth embodiment of the present invention; and

Fig. 11 is a schematic diagram showing a seventh embodiment of the present invention.

DETAILED DESCRIPTION OF THE INVENTION:

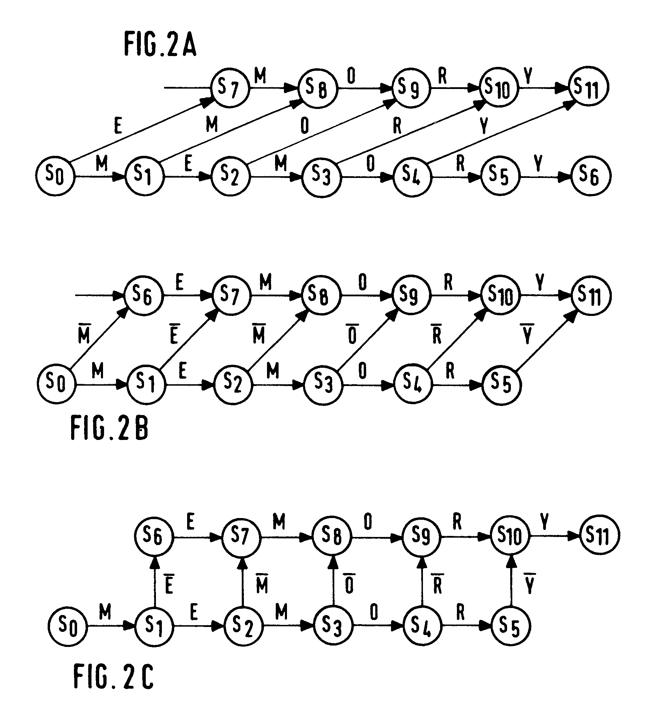

Figs. 2(a), 2(b) and 2(c) are state shift diagrams of sequence logic showing the principle of a data string retrieving apparatus in accordance with the present invention. The drawings illustrate the state shift diagrams which use "MEMORY" as the string to be collated by way of example, and can extract not only a string which exactly matches "MEMORY" but also those strings which contain incorrect characters, extra characters or from which characters are missing. The state node S0 represents an initial state, and each state node shifts to the next state node represented by each arrow when the symbol on each arrow is applied thereto.

When a symbol other than the symbol on the arrow is applied, the state node dodes not shift to the next state node but is rejected and cancelled, though this is not shown in the drawings.

Fig. 2(a) shows a state shift diagram which makes it possible to collate the collation symbol "MEMORY" with a string from which one character of "MEMORY" is missing. When the string "MEMORY" is applied, the state shifts sequentially to the state nodes S0, S1, S2, S3, S4 and S5 and finally reaches S6. When the state reaches S6, the symbol string that has been applied up to this points is judged as matching the string "MEMORY" to be retrieved. When a string from which one character of "MEMORY" is missed, such as "MEMRY", for example, is applied, the state shifts to S0, S1, S2, S3 and S10 and finally reaches S11. The state of the state node S11 is attained when a string from which one character of the collation string is missed is applied.

Fig. 2(b) shows a state shift diagram which makes it possible to extract a string containing one incorrect character in the collation string. When a string "MEM?RY" is applied, for example, the state positioned at the state node S0 shifts sequentially to S1, S2, S3, S9 and S10, and finally reaches S11. When a string containing two or more incorrect characters in the collation string such as "MEM??Y" is applied, the state of S0 shifts sequentially to S1, S2, S3 and S9, and then disappears and does not reach the state node S11. In other words, it is possible to judge whether or not the input string is a string containing one incorrect character in the collation string by supervising the state node S11.

Fig. 2(c) shows a state shift diagram which makes it possible to extract a string containing an additional symbol to the collation string. When "ME?MORY", for example, is applied, the state of the node S0 shifts sequentially to S1, S2, S7, S8, S9 and S10, and finally reaches S11. However, when a string containing two or more excessive symbols is applied, the state disappears at an intermediate portion.

In accordance with the state shift diagrams of Fig. 2, retrieval can be made not only for a string which is completely matches the collation string, but also for those strings from which characters are missing or which contain incorrect characters or extra characters.

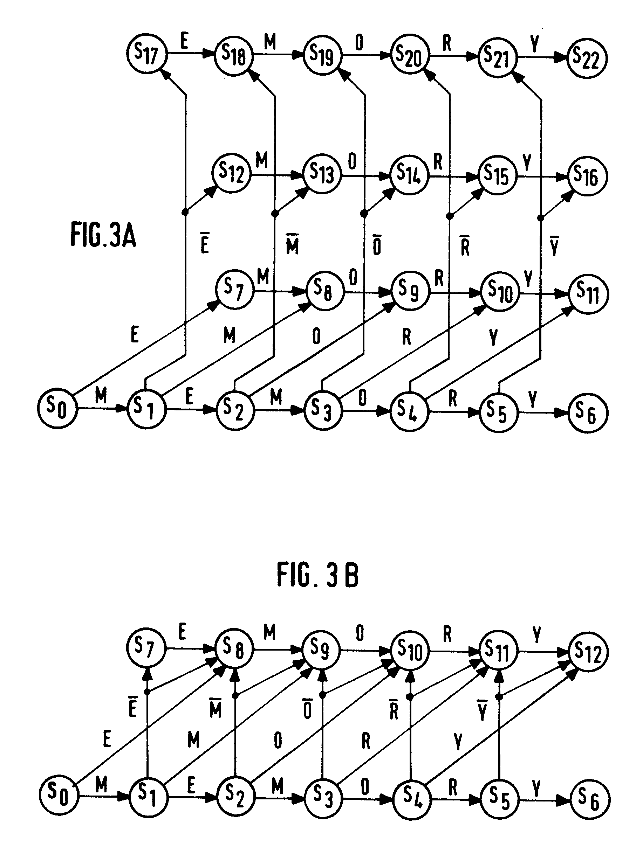

Figs. 3(a) and 3(b) are other state shift diagrams showing the principle of the data string retrieving apparatus in accordance with the present invention. The drawing is prepared by putting together the state shift diagrams of Figs. 2(a) to 2(c), and can cope with the missing characters, incorrect characters and extra characters as well as a string matching the collation string "MEMORY".

In Fig. 3(a), a string which matches the collation string, a string from which one character is missed, a string containing one incorrect character and a string containing one extra character are separated and extracted, and when these strings are applied, the state reaches each state node S6, S11, S16 and S22. When, for example, the string "MEMORY" matching the collation string is applied, the state shifts to S0 → S1 → S2 → S3 → S4 → S5 → S6. When a string from which one character is missed, that is, "MEMRY", is applied, the state shifts to S0 → S1 → S2 → S3 → S10 → S11. When a string containing one incorrect character, that is, "MEM?RY", is applied, the state shifts to S0 → S1 → S2 → S3 → S14 → S15 → S16. When a string containing one extra character, that is, "MEM?ORY", is applied, the state shifts to S0 → S1 → S2 → S3 → S19 → S20 → S21 → S22. In this manner, it is possible to judge whether the input strings are similar to the collation string by supervising the state nodes S6, S11, S16 and S22 at the final stage, and to determine which error has occurred.

Fig. 3(b) shows a state shift diagram which effects collation without discrimination of the fall-off, error and addition of the character, and the state nodes S7 to S22 of the first, second and third rows of Fig. 3(a) are put together to the state nodes S7 to S22 of Fig. 3(b). Upon receiving the input of the string which matches the collation string, the collation apparatus follows the state nodes S0 → S1 → S2 → S3 → S4 → S5 → S6. When a string from which one character is missed or a string containing one incorrect character or a string containing one extra character is applied, the state shifts from any of the state nodes S0 to S5 of the second row to any of the state nodes S7 to S12 of the first row, and finally reaches the state node S12.

In the manner described above, the strings similar to the collation string can be extracted from one state shift diagram.

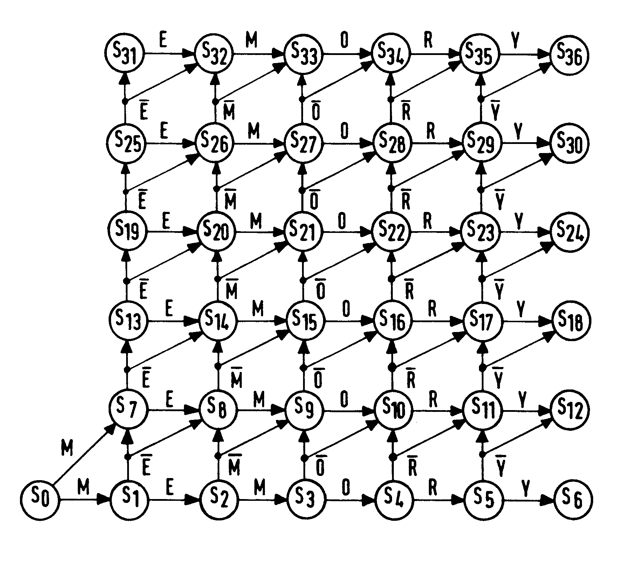

Fig. 4 shows a state shift diagram which makes it possible to effect collation of a string which matches the collation string, a string containing at least one incorrect character and a string containing at least one extra character. When a string matching the collation string is applied, the state of the state node S0 reaches S6, and when a string containing one incorrect character or a string containing one extra character is applied, the state reaches the node S12. When a string containing five incorrect characters of the collation string is applied, the state node S0 reaches S36. Thus, when a string which is less similar is applied, the state of the state node S0 reaches a state node at a higher-order position of the state shift diagram.

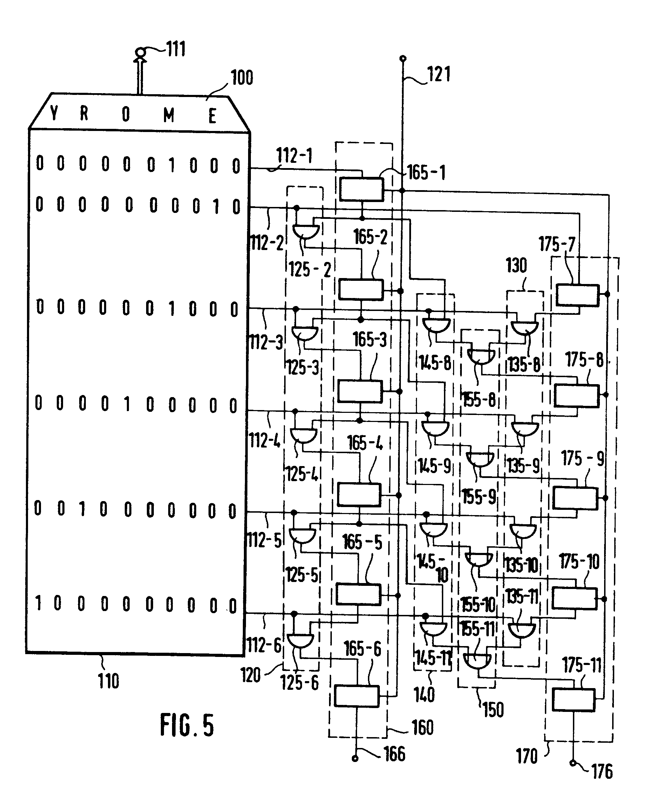

Referring to Fig. 5, a first embodiment of the invention is explained.

This data string retrieving apparatus operates in accordance with the state shift diagram shown in Fig. 2(a), and encodes data string included in a test such as shown in Fig. 1. The apparatus includes a data string memory array 110 storing a data string "MEMORY" in a bit pattern. The memory array 110 is addressed by a decoder 100 receiving a input data string through an input terminal 111. In the memory array 110, first, third, fifth seventh and ninth rows from the left side correspond to "Y, R, O, M and E" respectively and the decoder 100 energizes a row of the array corresponding to a character of input string. Output lines 112-0 to 112-5 are derived from the corresponding columns of the array 110. Namely, the output lines 112-1 to 112-6 are derived from first to sixth columns from the upper side of the array 110, respectively. The decoder 100 energizes one of rows corresponding to an input character. For example, when a character R is input to the terminal 111, the decoder activates the row desginated as "R" and an output of "1" is generated at the output line 112-5. The output lines 112-1 to 112-6 correspond to charactors along the state nodes S0 to S6 of Fig. 2(a), respectively. First AND gate group 120 includes a plurality of AND gates 125-2 to 125-6 having first inputs coupled to the output lines 112-2 to 112-6, respectively. A shift register 160 includes shift stages 165-1 to 165-1 whose contents correspond to the state nodes S1 to S6 of Fig. 2(a), respectively. Outputs of the shift stages 165-1 to 165-5 are input to second inputs of the AND gates 125-2 to 125-6 and the outputs of the AND gates 125-2 to 125-6 are applied to inputs of the register stages 165-2 to 165-5, respectively. The input of the register stage 165-1 is coupled to the output line 112-1 and the output of the register stage 165-6 is coupled to an ouput terminal 166 corresponding to the state node S6 in Fig. 2(a).

The shift register 160 and the first AND gate group 120 perform the logic flows S0 to S6 in Fig. 2(a). A second AND gate group 130 including AND gates 135-8 to 135-11 having first inputs coupled to the output lines 112-3 to 112-6, respectively. A third AND gate group 140 includes AND gates 145-8 to 145-11 having first inputs coupled to the output lines 112-3 to 112-6, respectively, as illustrated. A shift register 170 is composed of register stages 175-7 to 175-11. Outputs of the stages 175-7 are applied to second inputs of the AND gates 135-8 to 135-11, respectively, and an output of the register stage 175-11 is connected to an output terminal 176 from which an output corresponding to the state node S11 is derived. The outputs of the register stages 165-1 to 165-5 are also applied to second inputs of the AND gates 145-8 to 145-11. OR gates 155-8 to 155-11 in an OR gate group 150 receive outputs of AND gates 135-8 to 135-11 and AND gates 145-8 to 145-11, respectively, and output of the OR gates 155-8 to 155-11 are applied to inputs of the register stages 175-8 to 175-11, respectively. An input of the register stage 175 is connected to the output line 112-2. The shift register 170, and first and second AND gate groups 130 and 140 achieve the logic flow along the state nodes S7 to S11. In the embodiment shown in the drawing, the collation string "MEMORY" consisting of six characters is stored in the six-bit string memory array 110. In other words, "1" is stored at only those addresses which are designated by the symbols "M", "E", "M", "O", "R" and "Y" at the first to sixth bits of the memory array 110, and "O" is stored at the other addresses. The address of the string memory array 110 corresponds to the kind of each character, and the read-out signals 112 from the first to the sixth bits are "1" only when the corresponding symbols "M", "E", "M", "O", "R" and "Y" are applied.

The characters that constitute the text to be collated are sequentially applied to the string input terminal 111 and decoded by a decoder 100, and the bit content of the decoded address is read out. The register stages 165-1 to 165-6 and 175-7 to 175-11 take the input data in synchronism with a clock signal 121. Whether or not the shift to the next state node represented by the arrow in Fig. 2-(a) occurs is determined by a read-out signal of each output line 112i (i = 1 to 6). The logic value of the read-out signal 112i is determined by a character applied to the decoded address for the memory array 110 through the input terminal 111. When a character corresponding to the address of the memory array 110 at which "1" is stored is applied, the content of the one register stage is shifted to the next register stage through the first, second or third AND gate groups 120, 130 or 140. This corresponds to the shift represented by the arrow in the state shift diagram of Fig. 2(a).

The third AND gate group 140 plays the role of transmitting the content of the register stage 165 in the shift register 160 to the register stage 175 in the shift register 170. This corresponds to the shift from the stage node (S0 to S4) of the lower row to the state node (S7 to S11) of the upper row of Fig. 2(a).

Next, an example of collation operation will be described. First, the content of each of the stages of the shift registers 160 and 170 is cleared.

When the data string "MEMORY" is applied, one character at a time, from the string input terminal 111, the read-out signal 112-1 of the first bit of the memory array 110, which becomes an internal character for the input of the character "M", is first taken into the register stage 165-1 of the shift register 160. At this time, the read-out signal of the third bit 112-3 becomes also "1", but the register stage 165-3 at the third bit is not set to "1" because the content of the register stage 165-2 of the second bit is "0".

Subsequently, when the characters "E", "M", "O", "R" and "Y" are sequentially applied one by one, the signal in the register stage 165-1 of the first bit is transferred to the next register stage 165-2 when the character "E" is applied. Then, the content of the register stage 165-2 is transferred to the next stage 165-3 when the character "M" is applied to the terminal 111. Similarly, the content of the register stage 165-3 is transferred to the stages 165-4 and 165-5 in response to the applications of "O" and "R", respectively. When the last character "Y" is applied, the AND gate 125-6 generates "1" at its output and thus a first matching output signal 166 is generated. It is possible to judge the application of a string which matches the collation string from this first matching signal 166.

Next, when an incomplete string "MEMRY" from which one character "O" of the collation string is missed is applied, the internal character stored in the register stage 165-1 in the shift register 160 is transferred to the next register stage 165-3 in the shift register 160 until the application of third character "M". When the fourth symbol "R" is applied, however, the content of the third bit register stage 165-3 is transferred to the fourth bit register stage 175-10 in the shift register 170 through the AND gate circuit 140-10 and the OR gate 155-10. When the last symbol "Y" is applied, the second matching signal 176 is generated, and it becomes possible to judge that a string devoid of one symbol of the collation string has been applied.

As described above, the string retrieving apparatus of Fig. 5 can judge not only a string matching the collation string but also a string from which one symbol of the collation string is missed.

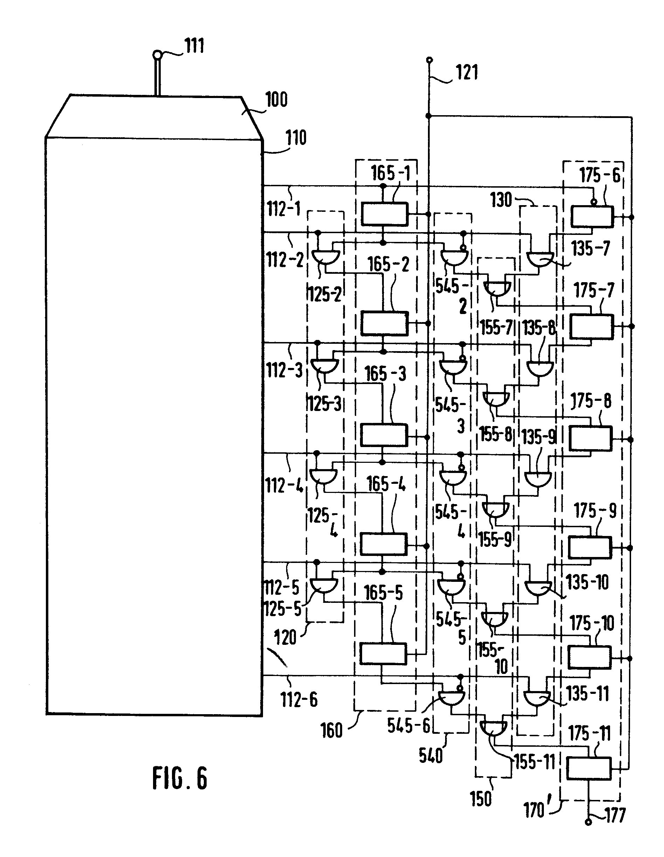

Fig. 6 is an explanatory view of the second embodiment of the present invention. This embodiment realizes the state shift diagram shown in Fig. 2(b). In Fig. 6, portions corresponding to those in Fig. 5 are designated by the similar references. This apparatus is different from the one shown in Fig. 5 in that it makes it possible to extract a string containing one error character in the data string, and employs AND gates 545-2 to 545-6 each equipped with a negative input.

Each of the register stages 165-1 to 165-5 in the shift register 160 corresponds to each state node S1, S2, S3, S4, S5 of Fig. 2(b), and each of the register stages 175-6 to 175-11 the shift register 170 corresponds to each state node S6, S7, S8, S9, S10, and S11. When a data string containing one error character is applied to the string input terminal 111, the internal signal in the register stage 165-i ($1 \leq i \leq 5$) in the register 160 is transferred to the register stage 175-j ($7 \leq j \leq 11$) in

the register 170 through the AND gate 545-i + 1 equipped with the inverted or negative input and through the OR gate group 155-i + 1 with respect to the output 112-i from which the error character output is generated. This corresponds to the shift from the state node of the lower-row to the state node of the higher-row in Fig. 2(b). When a string "MEM?RY" is applied, for example, the internal signal "1" is set to the first bit register stage 165-1. The content is transferred to the second and third bit register stages 165-2 and 165-3, then to the fourth bit register stage 175-4 in the register 170, and further to the fifth and sixth bit register stages 175-5 and 175-6. Therefore, when the application of the string "MEM?RY" has been completed, a third matching output signal 177 is generated.

In other words, this apparatus can extract a string containing one different character from the collation string.

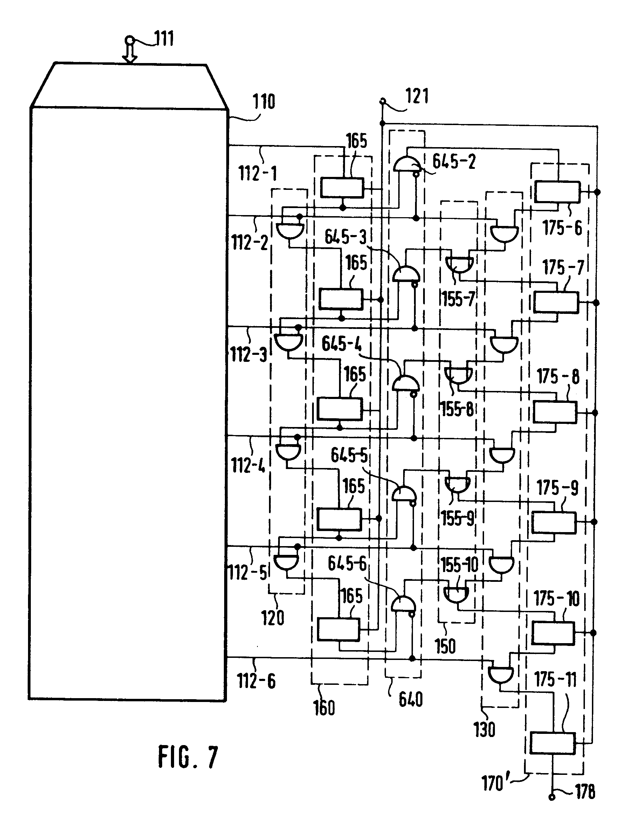

Fig. 7 is an explanatory view of the third embodiment of the present invention, and corresponds to the state shift diagram of Fig. 2(c). This string retriving apparatus is different from the apparatus shown in Fig. 6 in that it can extract a string containing one extra character not included in the collation string to be collated, and AND gate 645-2 to 645-6 each equipped with a negative input is connected in such a fashion that the content of the register stage 165-i (i ≤ i ≤ 5) in the register 160 can be transferred to the input of the register stage 175-i + 6 at the same bit position in the register array 170.

Each of the register stage 165-1 to 165-5 from the first to fifth bits in the register 160 corresponds to each state node S1, S2, S3, S4, and S5, and each of of the register stages 175-6 to 175-11 from the first to sixth bits in the register array 170 corresponds to each state node S6, S7, S8, S9, S10 and S11.

When a string containing an extra character not included in the collation string is applied, the internal signal of the register 165-i in the register 160 is transferred to the register stage 175-i + 6 in the register 170 through the AND gate circuit 645-i and through the OR gate 155-i + 6 upon the application of the excessive character. This corresponds to the shift from the lower-row state node to the higher-row state node in the state shift diagram of Fig. 2-(c). When the string "MEM?ORY" is applied, for example, the first bit read-out signal 112-1 as the internal signal is sequentially transferred to the first, second and third bit register stages 165-1 to 165-3 in the register 160, and when the symbol "?" is applied, the internal signal of the stages 165-3 is transferred to the third bit register stage 175-8 in the register 170. Next, the internal signal of the stage 175-8 is transferred to the fourth, fifth and sixth bit registers stages 175-9 to 175-11 in the register 170, and a fourth matching signal 178 is generated.

In the manner described above, a string containing one extra character not included in the collation string can be extracted.

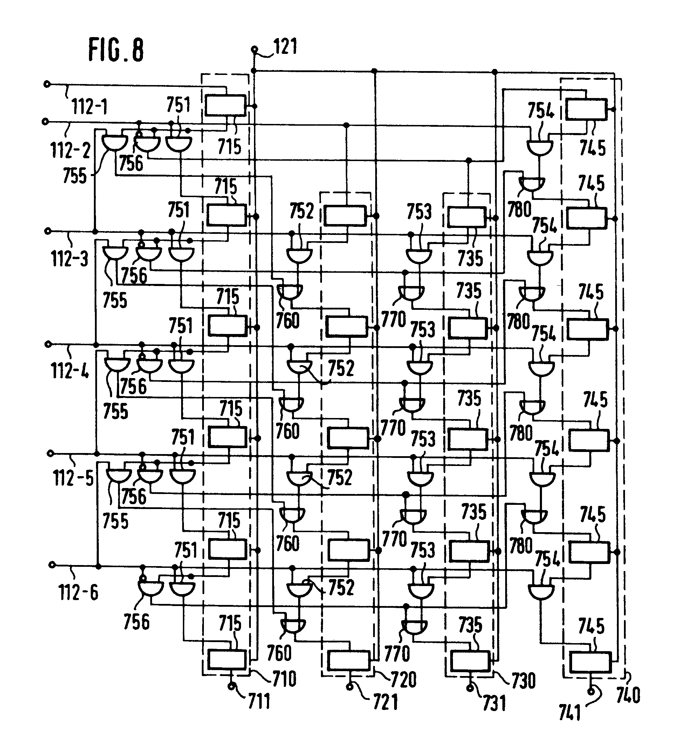

Fig. 8 is an explanatory view of a fourth embodiment of the present invention, and corresponds to the state shift diagram of Fig. 3(a). This string collation apparatus is produced by putting together the string collation apparatuses shown in Figs. 5, 6 and 7. In order to extract a string matching the collation string, a string from which one character of the collation string is missed, a string containing one incorrect character and a string containing one extra character not included in the collation string, the string collation apparatus includes first, second, third and fourth register arrays 710, 720, 730 and 740; first, second, third, fourth and fifth AND gate groups 751, 752, 753, 754, 755 and AND gates 756 each equipped with a negative input. First and second OR gates 760 and 770; and the string memory array 110 which is used for each of the string collation apparatus shown in Figs. 5, 6 and 7, through this is not shown in the drawing. The shift register 710 corresponds to that 160 in Fig. 5, and the shift registers 720, 730 and 740 correspond to those 170 in Figs. 5, 6 and 7, respectively in functions.

The first to sixth bit register stages 715 in the register 710 correspond to the state nodes S1, S2, S3, S4, S5 and S6 in the state shift diagram of Fig. 3(a), respectively, and the first to fifth bit register stages 725 in the register 720 correspond to the state nodes S7, S8, S9, S10 and S11, respectively. The first to fifth bit register stages 735 in the register 730 correspond to the state nodes S12, S13, S14, S15 and S16, and the first to sixth bit register stages 745 in the register 740 correspond to the state nodes S17, S18, S19, S20, S21 and S22, respectively.

When the string matching with the collation string is applied to the terminal 111, the read-out signal of the first bit as the internal signal sequentially shifts from the first bit register stage 715 in the register 710 to the sixth bit register stage 715, thereby generating the first matching signal 711. When a string from which one character of the collation string is missed is applied, the internal signal is transferred from the register 710 to the register 720 through the AND gate circuit 755 and the OR gate circuit 760, or if the first character "M" is missed, the internal signal is transferred to the register 720, thereby generating the second matching signal 721.

When a string containing one incorrect character which does not belong in the collation string is applied, the internal signal is transferred from the register 710 to the register 730 through the AND gate circuit 756 equipped with the negative input and the second OR gate circuit 770, thereby generating the third matching signal 731. When a string containing one extra character not included in the collation string is applied, the internal signal is transferred from the register 710 to the register 740 through the AND gate circuit 756 equipped with the negative input and the gate circuit 780, thereby generating the fourth matching signal. When a string which is further different from the collation string is applied, the internal signal disappears on the way, and the first to fourth matching signals 711, 721, 731 and 741 are not generated.

As described above, it becomes possible to extract only those strings which are similar to the collation string from the input strings by supervising the first to fourth matching signals 711, 721, 731 and 741.

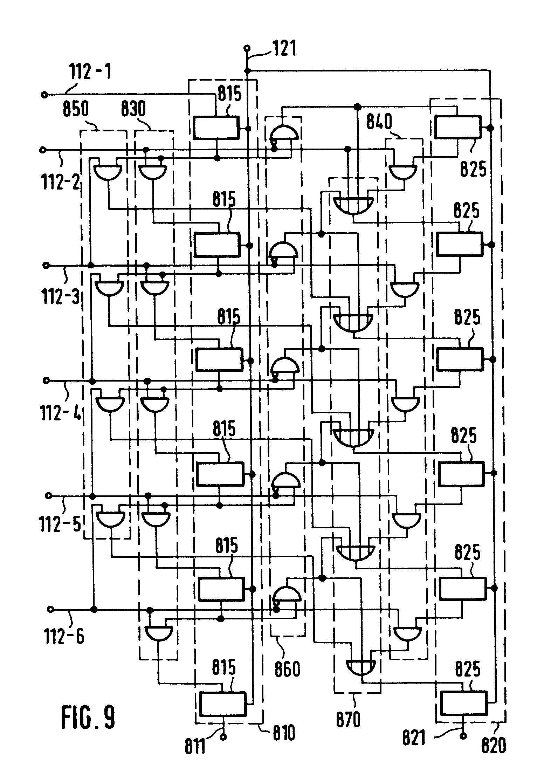

Fig. 9 is an explanatory view of a fifth embodiment of the present invention, and corresponds to the state shift diagram of Fig. 3(b). The string retrieving apparatus includes a first register array 810, a second register array 820, first, second and third AND gate circuits 830, 840, 850 and an AND gate circuit 860 equipped with a negative input, an OR gate circuit 870 and the memory array 110 of Fig. 5 which is not shown in the drawing.

This string retrieving apparatus can extract with equal facility, a string matching the collation string, a string from which one character of the collation string is missed, a string containing one incorrect character, or a string containing one extra character, and can eliminate the registers and the AND gate circuits from the string collation apparatus shown in Fig. 8.

The first to sixth bit register stages 815 in the register array 810 correspond to the state nodes S1, S2, S3, S4, S5 and S6 of Fig. 3(b), respectively, and the first to sixth bit register stages 825 in the register array 820 correspond to the state nodes S7, S8, S9, S10, S11 and S12, respectively. When a string matching the collation string is applied, the read-out signal 112-1 of the first bit of the memory means 110 is sequentially transferred as the internal signal from the first bit register stage 815 in the register array 810 to the sixth bit register stage 815 through the first AND gate 830, thereby generating the first matching signal 811. When a string from which one character of the collation string is missed or a string containing one incorrect character or a string containing one extra character is applied, the internal signal is transferred from the first register array 810 to the register array 820 through the third AND gate circuit 830, th4 AND gate circuit 860 equipped with the negative input and the OR gate circuit 870, thereby generating the second matching signal.

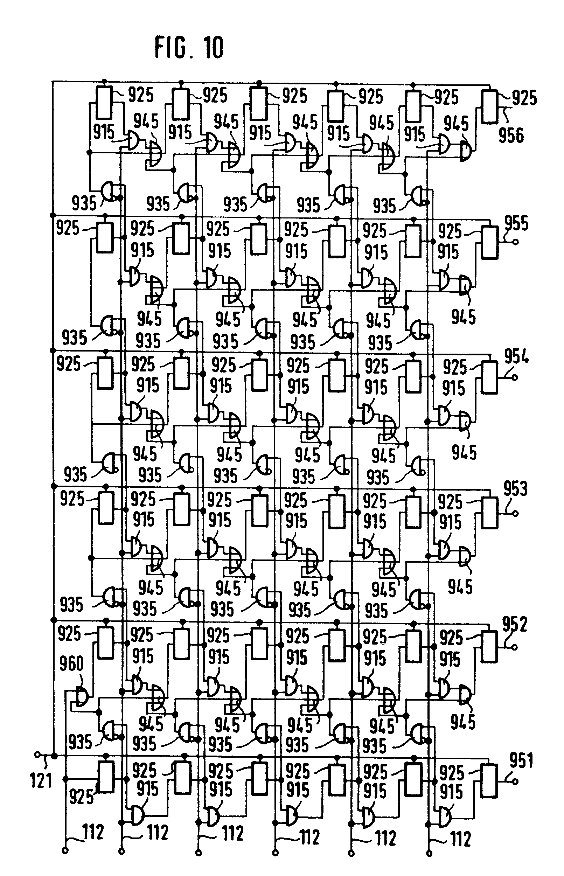

Fig. 10 is an explanatory view of a sixth embodiment of the present invention, and corresponds to the state shift diagram of Fig. 4. This apparatus can extract a string matching the collation string and those strings in which one to five characters of the collation string are wrong or in which one to five extra characters have been added. The string collation apparatus includes the memory array 110 of Fig. 5, not shown in the drawing; an AND gate array consisting of 6-row 6-column AND gate circuits 915 receiving each read-out signal 112 of the memory array 110 as the input; a 6-row 6-column register array whose adjacent registers are connected by the AND gate circuits 915; an AND gate array equipped with a negative input, which consists of 5-row 5-column AND gate circuits 935 equipped with a negative input and which connects the adjacent registers; and OR gate array consisting of 5-row 5-column OR gate circuits 945 that transmit the logical sum of each output of the AND gate circuits 915 and the AND gate circuits 935 equipped with the negative input to each register 925 in the register arrays; and an OR gate circuit 960 equipped with a negative input.

In the drawing, reference numerals representing the AND gate arrays, register arrays, AND gate arrays equipped with the negative input and OR gate arrays are omitted in order to simplify the drawing, but reference numerals 915, 925, 935 and 945 generically represent the AND gate circuit, the register, the AND gate circuit equipped with the negation input and the OR gate.

The AND gate array. The Ith row Jth (I and J being integers of 1 to 6) column AND gate circuit 935 equipped with the negative input in the AND gate array equipped with the negative input receives as its input the read-out signal 112 of the (J + 1)th bit and the content of the Ith row Jth column register 925 in the register array, and its output is applied to the inputs of the Ith row Jth column OR gate circuit 945 and Ith row (J + 1)th column OR gate circuit 945 in the OR gate array. Each of the 6-row 6-column registers 925 in the register array corresponds to each of the state nodes S1 to S36 of the state shift diagram of Fig. 4.

When a string matching the collation string is applied as the input, the read-out signal of the first bit of the string memory means 110, that is, the internal signal, is transferred from the first row first column register 925 in the register array to the sixth column register 925, thereby generating the first matching signal 951. When a string containing one or more incorrect characters or a string containing one or extra characters is applied, the internal signal is transferred from the first row first column register 925 in the register array to the next register 925.

At this time, if a character matching the character in the collation string is applied, the internal signal is transmitted to the register 925 of the same row but next column, and when a mismatch occurs, the internal signal is transmitted to the register 925 of the same column but to the row which is higher by one row, and to the register 925 of the next column. In other words, whenever a mismatch occurs, the internal signal is transmitted to the register 925 which is of a higher order by one.

Therefore, when a string containing one, two, three, four and five mismatching symbols of the symbols of the collation string is applied, second, third, fourth, fifth and sixth mismatching signals 952, 953, 954, 955 and 956 are generated.

In the manner described above, this string collation apparatus can separate the strings containing an arbitrary number of errors or extra characters into a number of such characters and can extract such strings.

The numbers of rows and columns of the AND gate array, AND gate array equipped with the negative input, register array and OR gate array can be changed in accordance with the number of characters of the collation string and with the number of characters to be extracted.

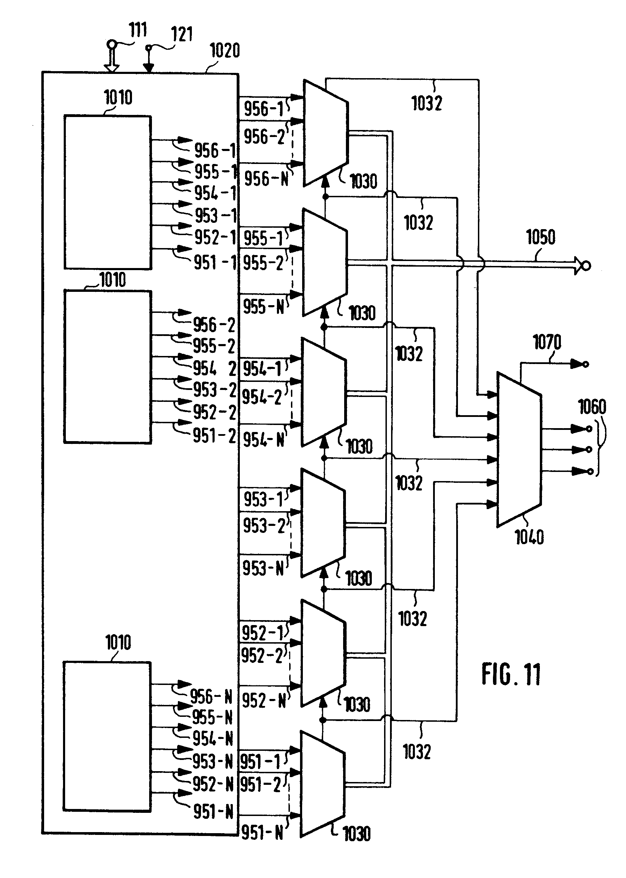

Fig. 11 is an explanatory view of the string retrieving apparatus of a seventh embodiment of the present invention. This string retrieving apparatus collates in parallel a plurality of collation strings, and generates a matching code 1050 representing the class of similar collation strings and a difference signal 1060. The apparatus is composed of a string collation portion 1020 containing N (positive integer) string collation units 1010 corresponding to the string collation apparatus shown in Fig. 9; six first encoders 1030 that receive as their inputs the first matching signals 950-1 to 951-N, second matching signals 952-1 to 952-N, third matching signals 953-1 to 953-N, fourth matching signals 954-1 to 954-N, fifth matching signals 955-1 to 955-N and sixth matching signals 956-1 to 956-N produced from the string collation units 1010, respectively; and second encoders 1040 that receive as their inputs the OR outputs 1032 of the first encoders 1030.

As explained already with reference to Fig. 10, each string collation unit 1010 collates the input string with the collation string and generates the first to sixth matching signals 951 to 956 in accordance with the number of different symbols. The first matching signal 951 represents complete matching and hence, the lowest different, while the sixth matching signal 956 represents that five characters differ from the characters of the collation string; therefore, this signal represents the highest difference. An OR signal 1032, that is generated by the next low-order encoder 1030, is supplied to the inhibit input of each first encoder 1030. The output of the first encoder 1030 which receives the OR signal 1032 at its input enters the high impedance state. The OR signal 1032 is generated when the matching signal is applied to the corresponding first encoder 1030. Therefore, the lower the order of position of the first encoder 1030, the higher becomes the priority, and the first encoder(s) 1030 at the higher-order position than the first encoder 1030 that generates the OR signal 1032 is inhibited, and its output enters the high impedance state.

If none of the matching signals are applied to the first encoder 1030, the output of the encoder enters the high impedance state and the OR signal 1032 is not generated. Therefore, only the first encoder 1030 which is connected to the matching signal having the lowest difference among the matching signals generated by each string collation unit 1010 is operated, and the outputs of the other first encoders 1030 are in the high impedance state. In other words, the matching code 1050 produced by the first encoder 1030 represents the number of the string collation unit 1010 storing the collation string which is similar to the input string, that is, the class of the most similar string. The OR signal 1032 is applied to the second encoders 1040, too. The second encoders 1040 produce as the difference signal 1060 the number of the matching signal that represents the lowest difference among the matching signals that are generated, and they produce the matching signal 1070 which indicates that a similar string has been applied.

It is assumed, for example, that the collation string "MEMORY" is stored in the second string collation unit 1010 from above, and collation strings entirely different from "MEMORY" are stored in the other string collation units 1010. When a string "ME??RY" is applied from the string input terminal 111, the third matching signal 953-2 is applied only to the lower-third first encoder 1030. Therefore, that first encoder 1030 produces the matching code 1050 of "1" representing the collation string in the second string collation unit 1010. The second encoder 1040 produces a difference signal of "2" representing that the input string differs by two characters from the collation string, and the matching signal 1070 as well. Therefore, it is possible to judge from outside that the input string is one that contains two characters which differ from the second collation string.

As described above, the string collation apparatus can store many collation strings, can collate them with the input strings and can generate the difference. Since the matching code 1050 and difference signal 1060 as its outputs are encoded, the number of output terminals can be markedly reduced. In consequence, the apparatus can easily be constituted in a large scale integrated circuit configuration, thereby reducing the cost of production.

Incidentally, the number of string collation units 1010 is not limited to 6, in particular, but may be arbitrary.

As described above, the present invention can provide a string retrieving apparatus which easily reduces the very long collation time which is necessary in conventional string collation. The apparatus of the present invention can also extract those strings from which characters are missed as well as those which contain incorrect characters or extra characters, and can extract them in accordance with the number of incorrect characters in the strings.

English words, particularly nouns, are inflected at their terminal end. For example, the plural form of "memory" is "memories". In this case, the plural form can also be extracted by using the basic form "memory" as the collation string and supervising a plurality of matching signals and the difference signal 1060. It is not possible to generally judge in advance at which part which characters are missing, which characters are extra and which are incorrect. In the conventional string collation systems, therefore, it has been necessary to prepare a program in order to allow such changes. In the string collation apparatus of the present invention, however, varied string collation becomes possible by supervising the second, third and fourth matching signals or the difference signal 1060.

The present invention reduces the number of input-output terminals, can easily realize LSI configuration and reduces the cost of production. In accordance with the present semiconductor technique of 256K-bit RAMs, 128 collation strings, each consisting of eight 8-bit code signals, can be stored in one chip, and these strings can be collated in parallel with one another.

The fact that the strings consisting of 256 kinds of symbols in one chip can be classified into 128 classes means that up to 128 keywords (strings) can be altogether extracted from a string text which is sequentially read out from an original file of the text prepared by a word processor. This advantage is extremely great because simultaneous retrieval of a large number of keywords has been difficult in the past.

This string apparatus is useful for the classification of feature series in a system for pattern recognition such as OCR apparatuses or voice recognition apparatuses. When constituted in one-chip LSI, this apparatus is also useful as a dictionary for language translation. The translation of up to 128 words per chip can be obtained immediately upon the application of the input string by connecting an ordinary RAM to this chip and storing the translated word of each word in accordance with the classification code of each strong. A variety of information can be stored in the ordinary RAM connected to the string collation chip in accordance with the classification code, so that various string information processing can be accomplished. If, for example, the part-of-speech codes of words, the number of times of appearance of symbols and processing commands for string texts are stored in accordance with the classification codes of strings, collection and classification of knowledge can be made easily.

As to the processing speed of this string extraction apparatus, the cycle time Tc of the semiconductor RAMs used for the symbol memory means 210, 410 substantially corresponds to the processing time of the symbol. If Tc is 100 ns, collation of a text consisting of $10^9$ strings with a string of $10^3$ can be made in 10 seconds. Since collation by existing softwares needs about 10 hours of time, the string collation apparatus of the present invention markedly reduces collation time.

As described above, the present invention can easily eliminate the problems of the prior art technique using a microcomputer in combination with software for classifying strings in that in the prior art, the processing time is long and flexibility is low. In view of the fact that the string collation apparatus can be easily constituted by a one chip LSI, such an LSI becomes an indispensable functional element for the extraction of keywords from the original file of a text, for an electronic dictionary for language translation and for the classification of feature series in a pattern recognition system.

In the embodiments described above, the high level is used as the logic "1" for the first, second and third AND gate circuits 120, 130, 140 and the OR gate circuit 150 shown in Fig. 1, the AND gate circuits equipped with the negative input 540, 640 shown in Figs. 5 and 6, the first to fifth AND gate circuits 751 755 and the first to third OR gate circuits shown in Fig. 8, the AND gate circuit 860 equipped with the negative input and the OR gate circuit 870 shown in Fig. 8, and the AND gate circuit 915, the AND gate circuit equipped with the negative input 935 and the OR gate circuit 945 shown in Fig. 10. If the circuit is designed by negative logic using logic "0" for the high level, the AND gate circuits change to the OR gate circuits and the OR gate circuits change to the AND gate circuit. Therefore, the gate circuits described above can be replaced by a variety of logical gate circuits and do not in any way limit the scope of claims of the present invention.

**Claims**

1. A data string retrieving apparatus comprising means (III) for receiving a string of data, a memory array (110) having a plurality of memory locations arranged in rows and columns, said memory array being adapted to store a reference string of data, each now corresponding to one of the characters in said string, each column corresponding to the character position in a string, means (100) responsive to the received string of data for selecting the rows of said memory array thereby to sequentially activate the columns of said memory array, a plurality of first storage circuits (165-1 to 165-6, 165, 715, 815), and a plurality of first gating circuits (125-1 to 125-6, 120, 751, 830) forming a first shift register, each one of said first gating circuits being responsive to signals from one of said columns and one of said first storage circuits for transferring the content of said one first storage circuit to the adjacent one of said first storage circuits, so that the last one of the first storage circuits outputs a first signal if the string of data being supplied to the apparatus corresponds to a reference string of data, **characterized** by supplying the signal of the first column to the first one of the first storage circuits, and by further comprising a plurality of second storage circuits (175-6 to 175-11, 735, 745, 825) and a plurality of second gating circuits (130, 140, 150; 130, 150, 540; 130, 150, 640; 754, 780) forming a second shift register, each one of said second gating circuits being responsive to a signal from one of said columns for selectively transferring a logic sum of the contents of one of said first storage circuits and one of said second storage circuits to another one of said second storage circuits, so that the last one of the second storage circuits outputs a second signal if the string of data being supplied to the apparatus corresponds to predetermined incorrect forms of the reference string of data.

2. The apparatus according to claim 1, **characterized** in that said columns of said memory array are classified into first to n-th (n being an integer more than 2) columns, and the first gating circuit coupled to i-th ($2 \leqq i \leqq n$) column is adapted to transfer the content of the first storage circuit arranged for (i-1)th column to the first storage circuit arranged for i-th column.

3. The apparatus according to claim 1, **characterized** in that said columns of said memory array are classified into first to n-th (n being an integer more than 2) columns, and the second gating circuit coupled to i-th ($2 \leqq i \leqq n$) column is adapted to transfer the logic sum of the contents of the first storage circuit arranged for (i-1)th column and the second storage circuit arranged for (i-1)th column to the second storage circuit arranged for i-th column.

**Revendications**

1. Appareil de recherche de chaîne de données comprenant un moyen (111) pour recevoir une chaîne de données, une mémoire matricielle (110) comportant une multitude d'emplacements mémoire disposés en rangées et colonnes, la mémoire matricielle étant prévue pour stocker une chaîne de référence de données, chaque rangée correspondant à un des caractères dans la chaîne, chaque colonne correspondant aux positions des caractères dans une chaîne, un moyen (100) sensible à la chaîne reçue de données pour sélectionner les rangées de la mémoire matricielle pour activer séquentiellement de ce fait les colonnes de la mémoire matricielle, une multitude de premiers circuits mémoires (165-1 à 165-6, 165, 715, 815) et une multitude de premiers circuits de porte (125-1 à 125-6, 120, 751, 830) formant un premier registre à décalage, chacun des premiers circuits de porte étant sensible aux signaux provenant d'une des colonnes et d'un des premiers circuits mémoires pour transférer le contenu d'un premier circuit mémoire au circuit adjacent des premiers circuits mémoires de sorte que le dernier des premiers circuits mémoires sort un premier signal si la chaîne de données étant appliquée à l'appareil correspond à une chaîne de référence de données, caractérisé par l'application de signal de la première colonne au premier circuit des premiers circuits mémoires et par ce qu'il comprend de plus une multitude de seconds circuits mémoires (175-6 à 175-11, 735, 745, 825) et une multitude de seconds circuits de porte (130, 140, 150 ; 130, 150, 540 ; 130, 150, 640 ; 754, 780) formant un second registre à décalage, chaque circuit des seconds circuits de porte étant sensible à un signal provenant d'une des colonnes pour transférer sélectivement une somme logique des contenus d'un des premiers circuits mémoires et d'un des seconds circuits mémoires à un autre des seconds circuits mémoires de sorte que le dernier des seconds circuits mémoires sort un second signal si la chaîne de données étant appliquée à l'appareil correspond à des formes incorrectes prédéterminées de la chaîne de référence de données.

2. Appareil selon la revendication 1, caractérisé en ce que les colonnes de la mémoire matricielle sont classées en première à $n^{ième}$ (n étant un nombre entier supérieur à 2) colonnes, et en ce que le premier circuit de porte couplé à la $i^{ième}$ colonne ($2 \leq i \leq n$) est prévu pour transférer le contenu du premier circuit mémoire disposé pour la $(i-1)^{ième}$ colonne au premier circuit mémoire disposé pour la $i^{ième}$ colonne.

3. Appareil selon la revendication 1, caractérisé en ce que les colonnes de la mémoire matricielle sont classées en première à $n^{ième}$ (n étant un nombre entier supérieur à 2) colonnes et le second circuit de porte couplé à la $i^{ième}$ - ($2 \leq i \leq n$) colonne est prévu pour transférer le somme logique des contenus du premier circuit mémoire disposé pour la $(i-1)^{ième}$ colonne et du second circuit mémoire disposé pour la $(i-1)^{ième}$ colonne au second circuit mémoire disposé pour la $i^{ième}$ colonne.

**Patentansprüche**

1. Gerät zum Wiederauffinden von Datenfolgen mit einer Einrichtung (111) zum Empfang einer Datenfolge, einer Speicheranordnung (110) mit einer Anzahl von Speicherplätzen, die in Zeilen und Spalten angeordnet sind, wobei die Speicheranordnung eine Bezugsdatenfolge speichern kann, jede Zeile einem der Zeichen in der Folge entspricht und jede Spalte der Zeichenstellung in einer Folge entspricht, einer Einrichtung (100), die auf die empfangene Datenfolge anspricht zum Auswählen der Zeilen der Speicheranordnung und damit zum aufeinanderfolgenden Aktivieren der Spalten der Speicheranordnung, einer Anzahl erster Speicherschaltungen (165-1 bis 165-6, 165, 715, 815) und einer Anzahl erster Torschaltungen (125-1 bis 125-6, 120, 751, 830), die ein erstes Schieberegister bilden, wobei jede der ersten Torschaltungen auf Signale aus einer der Spalten und von einer der ersten Speicherschaltungen anspricht zum Übertragen des Inhaltes dieser einen Speicherschaltung an die angrenzende der ersten Speicherschaltungen, sodaß die letzte der ersten Speicherschaltungen ein erstes Signal ausgibt, falls die dem Gerät zugeführte Datenfolge einer Bezugsdatenfolge entspricht, **gekennzeichnet** durch das Zuführen des Signals der ersten Zeile an die erste der ersten Speicherschaltungen und durch ferner eine Anzahl von zweiten Speicherschaltungen (175-6 bis 175-11, 735, 745, 825) und eine Anzahl von zweiten Torschaltungen (130, 140, 150; 130, 150, 540; 130,150, 640; 754, 780), die ein zweites Schieberegister bilden, wobei jede der zweiten Torschaltungen auf ein Signal aus einer der Spalten anspricht zum wahlweisen Übertragen einer logischen Summe der Inhalte einer der ersten Speicherschaltungen und einer der zweiten Speicherschaltungen an eine andere der zweiten Speicherschaltungen, sodaß die letzte der zweiten Speicherschaltungen ein zweites Signal ausgibt, falls die dem Gerät zugeführte Datenfolge einer vorgegebenen inkorrekten Form der Bezugsdatenfolge entspricht.

2. Gerät nach Anspruch 1,
dadurch **gekennzeichnet** daß die Spalten der Speicheranordnung in 1. bis n-te Spalten (n ist eine natürliche Zahl größer als 2) klassifiziert sind und daß die erste Torschaltung, die mit der i-ten ($2 \leq i \leq n$) Spalte verbunden ist, den Inhalt der ersten Speicherschaltung, die für die (i-1)te Spalte vorgesehen ist, an die für die i-te Spalte vorgesehene, erste Speicherschaltung übertragen kann.

3. Gerät nach Anspruch 1,
dadurch **gekennzeichnet,** daß die Spalten der Speicheranordnung in erste bis n-te (n ist eine natürliche Zahl größer als 2) klassifiziert sind und daß die zweite Torschaltung, die mit der i-ten ($2 \leq i \leq n$) Spalte verbunden ist, zum Übertragen der logischen Summe der Inhalte der ersten Speicherschaltung, die für die (i-1)te Spalte vorgesehen ist, und der zweiten Speicherschaltung, die für die (i-1)te Spalte vorgesehen ist, an die zweite Speicherschaltung, die für die i-te Spalte vorgesehen ist, übertragen kann.

## FIG. 1

Magnetic <u>bububle</u> <u>memories</u> are non-mechanical solid state file <u>memories</u>. They are used in electronic switching systems and spacecraft, because of their excellent endurance and environmental tolerance. In the future, they will be used as built-in compact file such as personal computers. ------------

FIG.2A

FIG.2B

FIG. 2C

EP 0 178 651 B1

FIG.3A

FIG. 3 B

14

FIG. 5

FIG. 6

FIG. 7

FIG.8

FIG.9

FIG. 10

FIG. 11